# FASCICULE DE BREVET EUROPEEN

(11) **EP 2 127 000 B1**
(45) Date de publication et mention de la délivrance du brevet: **29.10.2014**
(21) Numéro de dépôt: 07872384.8
(22) Date de dépôt: 18.12.2007
(51) Int. Cl.: H01M 2/00, H01M 10/42, H01M 10/34

(54) **DISPOSITIF DE SECURITE POUR ACCUMULATEUR ETANCHE**
SICHERHEITSVORRICHTUNG FÜR EINEN WASSERDICHTEN AKKUMULATOR
SAFETY DEVICE FOR A WATERTIGHT ACCUMULATOR

(30) Priorité: 22.12.2006 FR 0611251
(43) Date de publication de la demande: 02.12.2009
(73) Titulaire: Saft Groupe S.A., 93170 Bagnolet (FR)
(72) Inventeur: RIGOBERT, Gérard, F-33370 Fargues St Hilaire (FR)
(74) Mandataire: Hirsch & Associés
(86) Numéro de dépôt international: PCT/FR2007/002097
(87) Numéro de publication internationale: WO 2008/093007

(56) Documents cités:
- WO-A-2004/049494
- FR-A- 2 881 580
- US-B1- 6 248 470

## Description

La présente invention se rapporte à un dispositif de sécurité pour accumulateur étanche.

Un accumulateur étanche ou générateur électrochimique étanche (ces deux termes étant équivalents, on utilisera le terme d'accumulateur dans la présente description) comprend de façon connue en soi un faisceau électrochimique comportant une alternance d'électrodes positives et négatives encadrant des séparateurs imprégnés d'électrolyte ; ce faisceau électrochimique constitue le coeur de l'accumulateur. Chaque électrode est composée d'un collecteur de courant métallique supportant sur au moins une de ses faces la matière électrochimiquement active. L'électrode est connectée électriquement à une sortie de courant qui assure la continuité électrique entre l'électrode et l'application extérieure à laquelle l'accumulateur est associé. Le faisceau d'électrodes est disposé dans un conteneur fermé de manière étanche par un couvercle.

L'invention concerne tout type d'accumulateur étanche, notamment les accumulateurs de type nickel-cadmium, nickel-métal hydrure et lithium-ion. Ces accumulateurs peuvent être de format cylindrique ou de format rectangulaire (connu également sous le terme de prismatique).

Un accumulateur est généralement conçu pour fonctionner dans des conditions dites nominales, c'est-à-dire dans des gammes de température, courant et tension données. L'utilisation d'un accumulateur étanche hors des conditions nominales, comme par exemple une surcharge accidentelle, un court-circuit, une température supérieure à la température maximale de fonctionnement, etc., crée un risque d'explosion. En effet, de telles situations entraînent un échauffement de l'électrolyte et la formation de vapeurs d'électrolyte. L'accumulation de ces vapeurs dans le conteneur entraîne une augmentation de la pression interne de l'accumulateur, qui peut conduire à un éclatement violent du conteneur et à la projection de composés chimiques nocifs et corrosifs pour l'environnement et les personnes situées à proximité.

Des dispositifs de sécurité existent, qui évitent l'accumulation des gaz à l'intérieur du conteneur d'un accumulateur étanche et permettent leur évacuation lorsque la pression interne excède une valeur prédéterminée.

Le document US-A-5 523 178 décrit un dispositif de sécurité constitué d'une soupape. Cette soupape présente cependant l'inconvénient d'être de conception complexe. Lorsque leur conception est simple, les soupapes ont le désavantage de ne s'ouvrir que pour des pressions élevées ou de ne s'ouvrir que pour une plage étroite de pressions. En outre, de tels dispositifs de soupape nécessitent d'être couplés à un coupe-circuit apte à isoler électriquement et de façon irréversible, les appareils connectés à l'accumulateur.

Le document EP-A-1 626 456 décrit un dispositif de sécurité pour accumulateur étanche qui cumule les fonctions de soupape et de coupe-circuit. Un amincissement est prévu dans une paroi d'extrémité du conteneur, cet amincissement étant apte à se déchirer sous l'effet d'une surpression dans le conteneur. Lorsque l'amincissement se déchire, la conduction électrique entre les électrodes d'une polarité et la borne de sortie de courant correspondante est interrompue. Le dispositif du document EP-A-1 626 456 donne satisfaction ; néanmoins, le déchirement de l'amincissement n'intervient que lorsque la pression dans l'accumulateur atteint un niveau important, de l'ordre de 8 à 12 bar. Une telle surpression dans l'accumulateur est généralement provoquée par une forte accumulation de vapeurs d'électrolyte formées lors d'un emballement du coeur.

Le document WO-A-2004/049494 décrit une batterie contenant un agent explosif qui génère un gaz à partir d'une température prédéterminée. L'agent explosif peut être dispersé dans la matière active de l'une des électrodes ou peut être inclus dans une couche interposée entre la matière active de l'électrode et le collecteur de courant. Le gaz généré par l'agent explosif est adapté à attaquer l'électrode ce qui a pour conséquence d'augmenter l'impédance de la cellule ; le courant de décharge est ainsi limité. Ce document ne décrit pas un coupe-circuit mais une désactivation de la cellule par un gaz corrosif libéré lors d'une surchauffe de la cellule.

De manière connue en soi, lors d'un court-circuit aux bornes d'un accumulateur de type lithium-ion, un fort courant d'environ 2500 A est généré pendant environ 1 seconde suivi d'un courant d'environ 600 A pendant 50 secondes. Lorsque de tels courants traversent l'accumulateur pendant 50 secondes à 1 minute, il y a échauffement puis emballement du coeur de l'accumulateur. Cet emballement provoque une surpression qui déclenche la soupape de sécurité d'un dispositif tel que décrit dans US-A-5 523 178 ou qui provoque le déchirement de l'amincissement décrit dans EP-A-1 626 456. On cherche cependant à empêcher un tel emballement du coeur qui conduit à une réaction violente et à l'émanation de vapeurs d'électrolytes nocives pour l'environnement.

Il existe un besoin pour un dispositif de sécurité qui permette d'interrompre rapidement le passage du courant à travers l'accumulateur avant que le coeur ne s'emballe ; notamment pour un dispositif de sécurité qui permette une ouverture du circuit avant que des vapeurs d'électrolyte aient pu se former en grande quantité.

A cet effet, l'invention propose d'élever artificiellement la pression à l'intérieur du conteneur de l'accumulateur pour actionner le coupe-circuit dès que la température devient supérieure à un seuil et donc avant que le coeur de l'accumulateur ne s'emballe.

L'invention concerne plus particulièrement un dispositif de sécurité pour accumulateur électrochimique étanche comprenant :
- un coupe-circuit actionné par une surpression à l'intérieur d'un conteneur de l'accumulateur ; et
- un générateur de gaz activé lorsque la température dans le générateur dépasse une valeur seuil prédéterminée.

Selon un mode de réalisation, une quantité prédéfinie de gaz est libérée par le générateur de gaz lorsque la température dans le générateur dépasse la valeur seuil prédéterminée pendant une durée supérieure à une valeur seuil prédéterminée.

Selon les modes de mise en oeuvre, la valeur seuil de température est comprise entre 130°C et 150°C et la valeur seuil de durée est comprise entre 10 et 20 secondes.

Selon un mode de réalisation, le générateur de gaz est une capsule étanche avant activation qui contient une poudre réactive.

Selon un mode de réalisation, le coupe circuit est constitué d'un amincissement prévu sur une paroi du conteneur de l'accumulateur, ledit amincissement étant adapté à être déchiré par une surpression à l'intérieur du conteneur.

Selon un mode de réalisation, l'activation du générateur de gaz entraîne une pression interne au conteneur supérieure ou égale à 8 bar.

Selon un mode de réalisation, le générateur de gaz est de format cylindrique. L'invention concerne aussi un accumulateur étanche comprenant :
- un conteneur recevant une alternance d'électrodes positives et négatives respectivement reliées à des bornes de sortie de courant positive et négative, et
- un dispositif de sécurité selon l'invention disposé dans le conteneur.

Selon un mode de réalisation, l'accumulateur comprend un élément thermiquement conducteur reliant le générateur de gaz à la borne de courant négative de l'accumulateur.

Selon un mode de réalisation, l'élément thermiquement conducteur est constitué par une connexion plane raccordant l'électrode négative du faisceau électrochimique de l'accumulateur à la borne de sortie de courant négative.

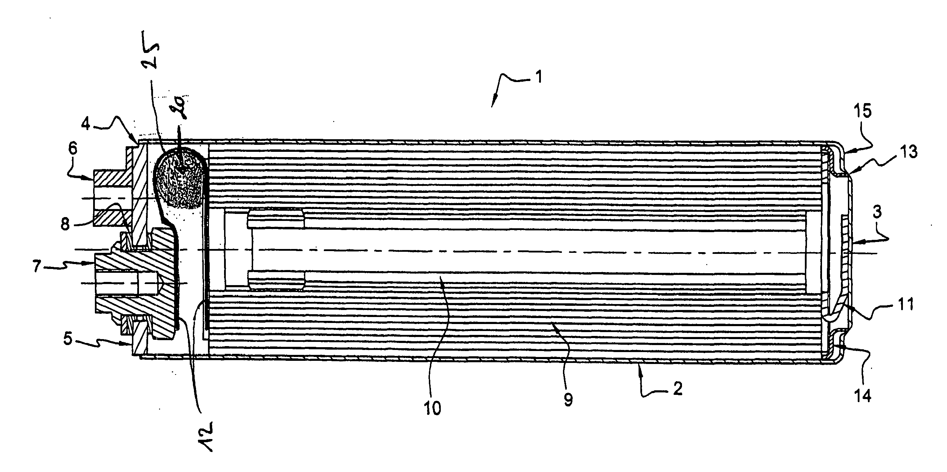

D'autres caractéristiques et avantages de l'invention apparaîtront à la lecture de la description qui suit, donnée à titre d'exemple et en référence à la figure annexée qui montre une vue en coupe longitudinale d'un accumulateur étanche muni d'un dispositif de sécurité selon l'invention. L'invention concerne un dispositif de sécurité pour accumulateur étanche. Le dispositif comprend un coupe-circuit actionné par une surpression à l'intérieur du conteneur de l'accumulateur et un générateur de gaz activé lorsque la température dans le conteneur dépasse une valeur seuil prédéterminée.

Ainsi dans l'hypothèse d'un dysfonctionnement de l'accumulateur tel qu'un court-circuit, le générateur de gaz est activé et libère un volume de gaz donné qui augmente la pression interne dans l'accumulateur et provoque l'actionnement du coupe-circuit. Le coupe-circuit est ainsi activé avant que des vapeurs d'électrolyte aient pu se former par un emballement du coeur.

L'invention va être décrite dans un mode préféré de réalisation donné à titre d'exemple.

La figure montre en coupe longitudinale un accumulateur étanche de type lithium-ion et de format cylindrique muni du dispositif de sécurité selon l'invention. Il est entendu que l'invention peut s'appliquer à tout autre type et format d'accumulateur électrochimique étanche.

L'accumulateur 1 comprend un conteneur présentant une paroi cylindrique 2 obturée par un fond 3 à une extrémité et ouverte à l'autre extrémité 4. Un couvercle 5 est placé sur l'extrémité ouverte. Le couvercle supporte des bornes de sortie de courant 6 et 7. Une des bornes de sortie de courant, dans l'exemple la borne positive 6, est soudée sur le couvercle. L'autre borne de sortie de courant, dans l'exemple la borne négative 7, passe à travers le couvercle. Elle est fixée sur celui-ci par tout moyen tel que vissage ou sertissage. Un joint 8 isole électriquement la borne de sortie de courant négative 7 du couvercle.

Un faisceau électrochimique 9, constitué par un enroulement d'électrodes positives, négatives et de séparateur, est disposé dans le conteneur autour d'un axe creux 10 qui sert de cheminée de gaz. Une connexion plane 11 raccorde l'électrode positive du faisceau à la paroi du fond 3 du conteneur 2, les parois du conteneur étant électriquement conductrices avec le couvercle. Une autre connexion plane 12 raccorde l'électrode négative du faisceau à la borne de sortie de courant négative 7. Un joint en forme d'anneau 14 est placé entre le faisceau électrochimique et le fond du conteneur. Il sert d'isolant électrique afin d'empêcher un contact électrique entre la tranche d'une électrode négative du faisceau et la paroi du conteneur reliée à la borne positive, ce qui pourrait occasionner un court-circuit.

L'accumulateur comprend un dispositif de sécurité comprenant un générateur de gaz 20 et un coupe-circuit 13 adapté à interrompre la conduction électrique entre les électrodes d'une polarité et la borne de sortie de courant correspondante.

Selon le mode de réalisation illustré, le fond 3 du conteneur présente un amincissement 13 qui est adapté à être déchiré par une surpression à l'intérieur du conteneur. Une réalisation d'un tel coupe-circuit est décrite en détail dans le document précité EP-A-1 626 456.

Selon un mode de réalisation, le générateur de gaz 20 contient une poudre réactive ; il est capable de produire un volume de gaz compris entre 200 cm³ et 400 cm³ sous 20 bars lorsque la poudre est portée à une température supérieure à une valeur seuil prédéterminée. Par exemple, le générateur de gaz 20 peut comprendre 0,8 grammes de matériau type PROPERGOL qui réagit aux alentours de 140°C. On pourra cependant utiliser d'autres poudres ou mélanges réactifs pour autant que leur température de mise à feu soit nettement supérieure à la température de fonctionnement nominale de l'accumulateur et inférieure à la température critique d'emballement du coeur ; c'est-à-dire une température seuil comprise entre environ 130°Cet environ 150°C.

Le générateur de gaz 20 est une capsule étanche avant activation, c'est-à-dire sans contact avec l'électrolyte ou la matière active des électrodes de l'accumulateur tant que la température ne dépasse la valeur seuil prédéterminée. Ainsi, contrairement à l'agent explosif décrit dans le document WO-A-2004/049494, la poudre réactive du générateur de gaz selon l'invention ne risque pas de perturber le fonctionnement de l'accumulateur en raison d'instabilité de la poudre à certains potentiels de fonctionnement. Le générateur de gaz 20 est illustré sous la forme d'un tube cylindrique, de préférence réalisé en un matériau ayant une bonne conductivité thermique comme le cuivre par exemple : le tube est fermé à ses deux extrémités et contient un élément réactif dont la mise à feu peut être déclenchée par dépassement d'une valeur seuil de température. Le générateur de gaz 20 présente des dimensions relativement faibles ; il peut être inséré dans le conteneur 2 de l'accumulateur sans modification substantielle de l'agencement du faisceau électrochimique 9. Par exemple, pour un accumulateur cylindrique tel qu'illustré sur la figure et présentant des dimensions de 220 mm de haut sur un diamètre de 54 mm, le tube du générateur de gaz 20 peut présenter une longueur de 26 mm pour un diamètre extérieur de 5 mm et un diamètre intérieur de 4,4 mm. Il est cependant entendu que toute autre forme qu'un cylindre peut être choisie pour le générateur de gaz du dispositif de sécurité selon l'invention, par exemple une forme de pastille, de cartouche ou autre.

Le générateur de gaz 20 peut être positionné à proximité de la borne de sortie de courant négative 7 afin de capter rapidement une élévation de température dans le conteneur 2. En effet, la borne de courant négative est typiquement en cuivre et elle s'échauffe rapidement par le passage de forts courants lors d'un court-circuit. On peut aussi prévoir un élément thermiquement conducteur 25 qui relie le générateur de gaz 20 à la borne de courant négative 7. Selon le mode de réalisation illustré, l'élément thermiquement conducteur 25 peut être constitué par la connexion plane 12 qui raccorde l'électrode négative du faisceau à la borne de sortie de courant négative 7 ; cette connexion plane 12, qui est typiquement en cuivre, peut être conformée de façon à encercler le tube du générateur de gaz 20. On obtient ainsi un dispositif de sécurité compact et efficace.

Le fonctionnement du dispositif de sécurité est maintenant décrit.

En cas de dysfonctionnement de l'accumulateur, la température dans l'environnement du générateur de gaz 20 augmente, soit du fait d'un court-circuit, soit du fait d'une température extérieure trop importante. Lors d'un court-circuit un fort courant est généré qui échauffe notamment la borne de sortie de courant négative 7. La température du tube du générateur de gaz 20 augmente alors, et ce d'autant plus rapidement lorsqu'un élément thermiquement conducteur 25 relie la borne de sortie de courant négative 7 au tube du générateur de gaz.

Lorsque la température dans le générateur de gaz dépasse une valeur seuil prédéterminée, typiquement supérieure à 130°C-150°C, pendant une durée qui dépasse une valeur seuil donnée, typiquement 10 à 15 secondes, la poudre contenue dans le tube réagit et le générateur de gaz libère un volume de gaz donné. Cette réaction provoque alors une surpression dans le conteneur 2 qui entraîne l'actionnement du coupe-circuit 13. La quantité de poudre réactive dans le générateur de gaz 20 peut être choisie pour créer une pression dans le conteneur 2 comprise entre 4 à 20 bar, de préférence entre 8 à 12 bar. L'épaisseur de l'amincissement 13 est choisie pour se déchirer sous l'effet d'une telle pression. La partie non déformée du fond 3 peut former un retour 15 empêchant l'éjection du faisceau électrochimique lors de la déchirure de l'amincissement. La surpression s'évacue alors par la déchirure et la pression à l'intérieur de l'accumulateur redescend à la pression atmosphérique. Simultanément à l'apparition de la déchirure, la conduction électrique entre la connexion plane de l'électrode positive 11 et la paroi du conteneur 2 est coupée, interrompant l'alimentation des consommateurs électriques.

Le déclanchement du dispositif de sécurité est rapide, inférieur à 20 secondes, et intervient pour des valeurs de température bien au-delà des valeurs de fonctionnement nominale de l'accumulateur (typiquement 140°C). Une telle température dans l'accumulateur pourrait provoquer l'emballement du coeur, mais cette température est localisée au niveau de la borne de courant négative (reliée au tube du générateur de gaz par un élément thermiquement conducteur. Comme la réaction du générateur de gaz est rapide (typiquement inférieure à 15 secondes), l'accumulateur n'a pas le temps de s'échauffer. Toute réaction violente est ainsi évitée. L'actionnement du coupe-circuit est provoqué par l'activation du générateur de gaz et non par les vapeurs d'électrolyte. Le dispositif de sécurité selon l'invention évite ainsi toute émanations de vapeurs nocives.

Lorsque le coupe-circuit est constitué par un amincissement d'une paroi du conteneur, le dispositif de sécurité présente également l'avantage de ne pas réduire la densité de courant circulant dans le circuit électrique comme cela est le cas pour l'utilisation de coupe-circuits montés en série. En effet, l'épaisseur de l'amincissement choisie est un compromis entre la section la plus grande possible pour assurer le passage du courant et la section la plus petite possible pour permettre une déchirure de l'amincissement.

Le dispositif de sécurité est donc bien adapté aux applications de haute puissance (véhicules hybrides par exemple), dans lesquelles de fortes densités de courants sont mises en oeuvre.

Le mode de réalisation détaillé ci-dessus et la figure doivent être considérés comme ayant été présentés à titre illustratif et non restrictif ; l'invention n'est pas censée être limitée aux détails fournis ici mais peut être modifiée en restant dans le cadre de la portée des revendications annexées. En particulier, le coupe-circuit peut être interne au conteneur ou former sur une paroi autre que le fond du conteneur.

## Revendications

1. Dispositif de sécurité pour accumulateur électrochimique étanche (1) comprenant :
- un coupe-circuit (13) actionné par une surpression à l'intérieur d'un conteneur (2) de l'accumulateur ; et
- un générateur de gaz (20) activé lorsque la température dans le générateur dépasse une valeur seuil prédéterminée.

2. Dispositif de sécurité selon la revendication 1, dans lequel le générateur de gaz (20) est adapté à libérer une quantité prédéfinie de gaz, ledit générateur de gaz (20) étant adapté à être activé lorsque la température dans le générateur dépasse une valeur seuil de température comprise entre 130°C et 150°C pendant une durée supérieure à une valeur seuil de durée comprise entre 10 et 20 secondes.

3. Dispositif de sécurité selon l'une des revendications 1 et 2, dans lequel le générateur de gaz (20) est une capsule étanche avant activation qui contient une poudre réactive.

4. Dispositif de sécurité selon l'une des revendications 1 à 3, dans lequel le coupe circuit est constitué d'un amincissement (13) prévu sur une paroi (3) du conteneur (2) de l'accumulateur, ledit amincissement (13) étant adapté à être déchiré par une surpression à l'intérieur du conteneur.

5. Dispositif de sécurité selon l'une quelconque des revendications 1 à 4, dans lequel le coupe-circuit (13) est adapté à être actionné par une surpression comprise entre 8 bar et 12 bar.

6. Dispositif de sécurité selon l'une quelconque des revendications 1 à 5, dans lequel le générateur de gaz (20) est de format cylindrique.

7. Accumulateur étanche comprenant :
- un conteneur (2) recevant une alternance d'électrodes positives et négatives respectivement reliées à des bornes de sortie de courant positive (6) et négative (7), et
- un dispositif de sécurité selon l'une des revendications 1 à 6 disposé dans le conteneur.

8. Accumulateur selon la revendication 7, comprenant un élément thermiquement conducteur (25) reliant le générateur de gaz (20) à la borne de sortie de courant négative (7) de l'accumulateur.

9. Accumulateur selon la revendication 8, dans lequel l'élément thermiquement conducteur (25) est constitué par une connexion plane (12) raccordant l'électrode négative du faisceau électrochimique de l'accumulateur à la borne de sortie de courant négative (7).

## Patentansprüche

1. Sicherheitsvorrichtung für eine versiegelte elektrochemische Batterie (1), die Folgendes umfasst:
- eine Sicherung (13), die durch einen Überdruck im Inneren einer Ummantelung (2) der Batterie ausgelöst wird; und
- einen Gasgenerator (20), der aktiviert wird, wenn die Temperatur in dem Generator einen vorher festgelegten Grenzwert überschreitet.

2. Sicherheitsvorrichtung nach Anspruch 1, wobei der Gasgenerator (20) dazu eingerichtet ist, eine vorher definierte Gasmenge freizusetzen, wobei der Gasgenerator (20) dazu eingerichtet ist, aktiviert zu werden, wenn die Temperatur in dem Generator einen Temperaturgrenzwert, der zwischen 130 °C und 150 °C liegt, für eine Dauer, die länger als ein Dauergrenzwert ist, der zwischen 10 und 20 Sekunden liegt, überschreitet.

3. Sicherheitsvorrichtung nach einem der Ansprüche 1 und 2, wobei der Gasgenerator (20) vor der Aktivierung eine versiegelte Kapsel ist, die ein reaktives Pulver enthält.

4. Sicherheitsvorrichtung nach einem der Ansprüche 1 bis 3, wobei die Sicherung aus einer Verjüngung (13) besteht, die auf einer Wand (3) der Ummantelung (2) der Batterie vorgesehen ist, wobei die Verjüngung (13) dazu eingerichtet ist, durch einen Überdruck im Inneren der Ummantelung aufgerissen zu werden.

5. Sicherheitsvorrichtung nach einem der Ansprüche 1 bis 4, wobei die Sicherung (13) dazu eingerichtet ist, durch einen Überdruck, der zwischen 8 bar und 12 bar liegt, ausgelöst zu werden.

6. Sicherheitsvorrichtung nach einem der Ansprüche 1 bis 5, wobei der Gasgenerator (20) eine zylindrische Form hat.

7. Versiegelte Batterie, die Folgendes umfasst:
- eine Ummantelung (2), die alternierende positive und negative Elektroden aufnimmt, die mit der positiven (6) bzw. der negativen (7) Stromausgangsklemme verbunden sind, und
- eine Sicherheitsvorrichtung nach einem der Ansprüche 1 bis 6, die in der Ummantelung angeordnet ist.

8. Batterie nach Anspruch 7, die ein wärmeleitendes Element (25) umfasst, das den Gasgenerator (20) mit der negativen Stromausgangsklemme (7) der Batterie verbindet.

9. Batterie nach Anspruch 8, wobei das wärmeleitende Element (25) von einem flachen Verbindungselement (12) gebildet wird, das die negative Elektrode des elektrochemischen Bündels der Batterie mit der negativen Stromausgangsklemme (7) verbindet.

## Claims

1. Safety device for a sealed electrochemical secondary cell (1) comprising:
- a circuit breaker (13) actuated by an excess pressure inside a container (2) of the secondary cell; and
- a gas generator (20) activated when the temperature in the generator exceeds a predetermined threshold value.

2. Safety device according to claim 1, in which the gas generator (20) is adapted to release a predefined quantity of gas, said gas generator (20) being adapted to be activated when the temperature in the generator exceeds a threshold value comprised between 130°C and 150°C for a duration greater than a threshold value comprised between 10 and 20 seconds.

3. Safety device according to claim 1 or 2, in which the gas generator (20) before activation is a sealed capsule which contains a reactive powder.

4. Safety device according to one of claims 1 to 3, in which the circuit breaker is constituted by a thinning (13) provided on a wall (3) of the container (2) of the secondary cell, said thinning (13) being capable of being torn by an excess pressure inside the container.

5. Safety device according to one of claims 1 to 4, in which the circuit breaker (13) is adapted to be activated by an excess pressure comprised between 8 and 12 bar.

6. Safety device according to one of claims 1 to 5, in which the gas generator (20) is of cylindrical format.

7. Sealed secondary cell comprising:
- a container (2) receiving alternating positive and negative electrodes respectively connected to positive (6) and negative (7) current output terminals, and
- a safety device according to one of claims 1 to 6 arranged in the container.

8. Secondary cell according to claim 7, comprising a thermally conductive element (25) connecting the gas generator (20) to the negative current output terminal (7) of the secondary cell.

9. The secondary cell according to claim 8 in which the thermally conductive element (25) is constituted by a flat connection (12) linking the negative electrode of the electrochemical bundle of the secondary cell to the negative current output terminal (7).
